# EUROPEAN PATENT SPECIFICATION

(11) **EP 3 589 603 B1**
(45) Date of publication and mention of the grant of the patent: **24.04.2024**
(21) Application number: 18706529.7
(22) Date of filing: 27.02.2018
(51) Int. Cl.: C04B 28/14, E04B 2/74, E04F 13/077, E04F 13/08, C04B 111/00

(54) **PLASTERBOARD PARTITION**
GIPSKARTONTRENNWAND
SÉPARATION DE PLAQUE DE PLÂTRE

(30) Priority: 03.03.2017 EP 17290032; 02.08.2017 EP 17184404
(43) Date of publication of application: 08.01.2020
(73) Proprietor: Etex Building Performance International SAS, 84915 Avignon (FR)
(72) Inventor: LOPEZ, Pauline, 84000 Avignon (FR); PEYRON, Pierre, 84260 Sarrians (FR); CHAOUCHE, Jimmy, 84000 Avignon (FR); LECLERCQ, Claude, 84210 Pernes les Fontaines (FR)
(74) Representative: Etex Services NV - Etex IPSC
(86) International application number: PCT/EP2018/054815
(87) International publication number: WO 2018/158253

(56) References cited:
- WO-A1-2016/055809
- WO-A1-2016/096162
- WO-A1-2016/188821
- US-A1- 2008 009 565
- US-A1- 2011 214 391
- US-B1- 8 038 790
- BACKSTROM M ET AL: "Timber-framed partition walls and their restraining effect on warp in built-in wall studs - Models for twist", CONSTRUCTION AND BUILDING MATERIALS, ELSEVIER, NETHERLANDS, vol. 23, no. 12, 1 December 2009 (2009-12-01), pages 3556-3563, XP026643390, ISSN: 0950-0618, DOI: 10.1016/J.CONBUILDMAT.2009.06.048 [retrieved on 2009-08-26]

## Description

### FIELD OF THE INVENTION

The present invention relates to partition walls and wall linings.

### BACKGROUND OF THE INVENTION

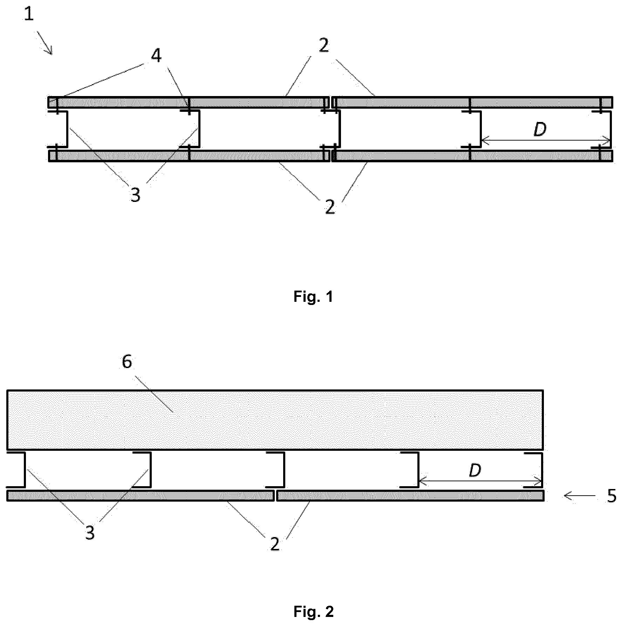

Partition walls are typically non-bearing walls that separate rooms or divide a room. They can be made of various materials, but often are made of plasterboard fixed on support members such as metal studs. **Fig. 1** shows a typical plasterboard partition wall (1) separating rooms A and B, containing two opposing layers formed of plasterboards (2), which are fixed on studs (3). The studs are typically oriented vertically. The boards may be further painted or decorated after installation. Wall linings can have a similar structure, except that there is a wall (6) instead of one of the plasterboard layers, for example as shown in **Fig. 2****.**

Typically, the distance between adjacent studs ("interstud distance") in partition walls or wall linings does not exceed 600 mm, in order to comply with the requirements regarding partition strength, e.g. impact resistance.

The positioning of studs and the fixation of the boards to the studs forms a considerable part of the total installation time of a partition wall or wall lining. Therefore, there is an interest for systems which allow for increasing the interstud distance, while maintaining a good mechanical strength. A known way to achieve this is by using thicker boards. For example, it is known to use an interstud distance up to 900 mm with plasterboards having a thickness of 18 mm instead of the conventional thickness of 12.5 mm.

There remains a need for other solutions which allow for using high interstud distances. US2008/009565 A1 describes light boards made of foamed gypsum slurries comprising polycarboxylate ether fluidizing agents comprising defoamer and surfactant, polysiloxane, clay and glass fibers.

WO 2016/188821 A1 describes gypsum boards having a thickness of 12.5 mm used for ceiling wherein the support members have an axis to axis interdistance of at least 900 mm.

US8038790 B1 discloses lightweight reinforced cement-gypsum boards having a density between 800-1600 kg/m³ and being able to resist lateral forces imposed by high wind and earthquake loads. These panels are used more particularly for floor and roof sheathing.

### SUMMARY OF THE INVENTION

It is an object of the present application to provide a construction comprising plasterboard partitions and wall liners containing support members which are positioned at relatively large distances from each other.

The invention is defined in the appended claims 1-7.

The present inventors surprisingly found that the core composition of the gypsum boards used in the construction described herein allows for obtaining exceptionally strong boards; thereby allowing for the use of higher interstud distances while still offering a good mechanical resistance of the construction. The higher interstud distances allow for a quicker installation of the construction and for considerable savings in material.

The independent and dependent claims set out particular and preferred features of the invention. Features from the dependent claims may be combined with features of the independent or other dependent claims, and/or with features set out in the description above and/or hereinafter as appropriate.

The above and other characteristics, features and advantages of the present invention will become apparent from the following detailed description which illustrates, by way of example, the principles of the invention. This description is given for the sake of example only, without limiting the scope of the invention.

### BRIEF DESCRIPTION OF THE DRAWINGS

The accompanying Figures are provided by way of example only and should not be considered to limit the scope of the present invention.
- **Fig. 1**: Schematic illustration of a cross-section of an exemplary partition wall (1).
- **Fig. 2**: Schematic illustration of a cross-section of an exemplary wall lining (5).

In the Figures, the following numbering is used:
1 - partition wall; 2 - plasterboard; 3 - support member; 4 - screw; 5 - lining; 6 - wall.

### DETAILED DESCRIPTION

The present invention will be described with respect to particular embodiments.

It is to be noticed that the term "comprising", used in the claims, should not be interpreted as being restricted to the means listed thereafter; it does not exclude other elements or steps. It is thus to be interpreted as specifying the presence of the stated features, steps or components as referred to, but does not preclude the presence or addition of one or more other features, steps or components, or groups thereof. Thus, the scope of the expression "a device comprising means A and B" should not be limited to devices consisting only of components A and B. It means that with respect to the present invention, the only relevant components of the device are A and B.

Throughout this specification, reference to "one embodiment" or "an embodiment" are made. Such references indicate that a particular feature, described in relation to the embodiment is included in at least one embodiment of the present invention. Thus, appearances of the phrases "in one embodiment" or "in an embodiment" in various places throughout this specification are not necessarily all referring to the same embodiment, though they could. Furthermore, the particular features or characteristics may be combined in any suitable manner in one or more embodiments, as would be apparent to one of ordinary skill in the art.

The following terms are provided solely to aid in the understanding of the invention. When reference is made to weight percentage (wt%), this is to be understood, unless differently specified, as the weight of the component expressed as percentage over the total weight of the composition in which the component is present.

The term "gypsum" as used herein refers to calcium sulphate dihydrate (DH), of the formula CaSO₄·2H₂O. Gypsum which is present in plasterboards typically is obtained via the hydration of plaster.

The term "plaster" or "stucco" as used herein and in the generally accepted terminology of the art, refers to a partially dehydrated gypsum of the formula CaSO₄·xH₂O, where x can range from 0 to 0.5. The term "plaster" is also referred to herein as "hydratable calcium sulphate". The term "dry weight" when referred to plaster in a plaster composition, refers to the weight of the calcium sulphate including hydration water (i.e. the xH₂O of the above formula), but excluding the gauging water in the composition. Plaster can be obtained via the calcination of gypsum, i.e. the thermal treatment of gypsum in order to remove (a part of) the combined water. For the preparation of plaster, natural or synthetic gypsum may be used. Natural gypsum may be obtained from gypsum rock or gypsum sand. Synthetic gypsum typically originates from flue gas desulphurization (FGD); or may be a byproduct from other processes such as the manufacturing of citric acid (citrogypsum), hydrofluoric acid (fluorogypsum), titanium dioxide (titanogypsum), or phosphoric acid (phosphogypsum). Gypsum obtained from FGD is also known as desulphogypsum (DSG).

Plaster wherein x is 0.5 is known as "calcium sulphate hemihydrate" (HH) or "calcium sulphate semihydrate" (SH), i.e. CaSO₄·0.5H₂O. Calcium sulphate HH can occur in different crystalline forms; known as α and β. Calcium sulphate HH is also known as "gypsum plaster" or "plaster of Paris".

Plaster wherein x is 0 is known as "calcium sulphate anhydrite" or "anhydrous calcium sulphate". "Calcium sulphate anhydrite III" (AIII) refers to a dehydrated HH with the potential of reversibly absorbing water or vapor. "Calcium sulphate anhydrite II" (All) refers to the completely dehydrated calcium sulphate (CaSO₄). All is formed at higher temperatures and is preferably not used for the preparation of plasterboard.

Methods for the calcination of gypsum are known in the art and will not be discussed further in this text.

The terms "plasterboard" and "gypsum board" as used herein interchangeably and refer to a panel or board comprising a gypsum core, obtainable from a plaster slurry as described herein. Accordingly, the term "plasterboard" refers to a board or panel which is obtainable via the setting (hydration) of plaster. The term "board" or "panel" as used herein refers to any type of wall, ceiling or floor component of any required size.

The term "alkyl" by itself or as part of another substituent, refers to a linear or branched saturated hydrocarbon group joined by single carbon-carbon bonds.

When a subscript is used herein following a carbon atom, the subscript refers to the number of carbon atoms that the named group may contain. Thus, for example, C₁₋₄alkyl means an alkyl of one to four carbon atoms. Examples of C₁₋₄alkyl groups are methyl, ethyl, propyl, isopropyl, butyl, isobutyl and tert-butyl.

The term "alkylene" by itself or as part of another substituent, refers to alkyl groups that are divalent, i.e., with two single bonds for attachment to two other groups. Alkylene groups may be linear or branched and may be substituted as indicated herein. Nonlimiting examples of alkylene groups include methylene (-CH₂-), ethylene (-CH₂-CH₂-), and methylmethylene (-CH(CH₃)-).

"C₁₋₆alkylene", by itself or as part of another substituent, refers to C₁₋₆alkyl groups that are divalent, i.e., with two single bonds for attachment to two other groups. Alkylene groups may be linear or branched and may be substituted as indicated herein.

The term "aryl", by itself or as part of another substituent, refers to a polyunsaturated, aromatic hydrocarbyl group having a single ring (i.e. phenyl) or multiple aromatic rings fused together (e.g. naphthalene), or linked covalently; wherein at least one ring is aromatic. Typical aryl groups may contain 6 to 10 atoms and are referred to as "C₆₋₁₀aryl". Aryl rings may be unsubstituted or substituted with from 1 to 4 substituents on the ring. Aryl may be substituted with halo, cyano, nitro, hydroxy, carboxy, amino, acylamino, alkyl, heteroalkyl, haloalkyl, phenyl, aryloxy, alkoxy, heteroalkyloxy, carbamyl, haloalkyl, methylenedioxy, heteroaryloxy, or any combination thereof. Examples of C₆₋₁₀aryl include phenyl, naphthyl, indanyl, or 1,2,3,4-tetrahydro-naphthyl.

The term "halo" as used herein refers to a halogen atom, more particularly F, Cl, Br, or I. Preferably, "halo" is CI.

The term "arylene" by itself or as part of another substituent, refers to aryl groups that are divalent, i.e., with two single bonds for attachment to two other groups. For example, the term "C₁₋₆alkyIC₆₋₁₀arylene", by itself or as part of another substituent, refers to a C₆₋₁₀aryl group as defined herein, wherein a hydrogen atom is replaced by a C₁₋₆alkyl as defined herein.

The term "monovalent metal" as used herein refers to a metal refers to a metal which is part of an ionic bond wherein said metal forms an ion having a charge of +1. Examples of monovalent metals are the metals (thus not including hydrogen) of Group 1 of the IUPAC periodic table. Preferred monovalent metals are Na, K, and Li.

The term "divalent metal" as used herein refers to a metal refers to a metal which is part of an ionic bond wherein said metal forms an ion having a charge of +2. Examples of divalent metals are the metals of Group 2 of the IUPAC periodic table. Preferred divalent metals are Mg and Ca.

The term "trivalent metal" as used herein refers to a metal refers to a metal which is part of an ionic bond wherein said metal forms an ion having a charge of +3. Examples of trivalent metals are Al and Fe.

The term "about" as used herein when referring to a measurable value such as a parameter, an amount, a temporal duration, and the like, is meant to encompass variations of +/-10% or less, preferably +/-5% or less, more preferably +/-1% or less, and still more preferably +/-0.1 % or less of and from the specified value, insofar such variations are appropriate to perform in the disclosed invention. It is to be understood that the value to which the modifier "about" refers is itself also specifically, and preferably, disclosed.

Provided herein are partitions and wall liners, comprising one or more plasterboards, and two or more support members such as studs. A partition is a structure that separates rooms, or divides a room in parts. Accordingly, a partition wall is a wall that separates rooms or divides a room in parts. A partition wall is typically not load-bearing, but it is not excluded that in certain embodiments, the partition wall may be load-bearing. **Fig. 1** shows a cross-section of a partition wall (1) as a non-limitative example. The partition wall (1) contains two layers of gypsum boards (2), fixed to support members such as metal studs (3) using screws (4). The space between the two layers of gypsum boards may be void or filled with insulating material or the like.

A wall lining, also referred to herein as "wall liner", is a structure for covering a wall. The wall lining according to the present application contains one or more boards or panels which cover a wall. The panels or boards may be used to conceal elements of the wall such as insulating materials, cables, bricks, etc.; and/or may serve other purposes such as fire protection, reduction of direct sound transmission through the wall, etc. **Fig. 2** shows a cross-section of a wall lining (5) as a non-limitative example. The wall lining (5) covers a wall (6) and contains a layer of gypsum boards (2) which are fixed to support members such as metal studs (3), the studs further being fixed to the wall (6). The fixation of the boards and studs is typically done via screws (not shown).

The skilled person will understand that the configurations shown in Figs. 1 and 2 only serve as an example, and that many variations on these configurations are possible. A non-limitative list of variations is provided below:
- the structures may contain additional layers of gypsum boards;
- other fixation means may be used;
- the relative amount of gypsum boards and studs may differ;
- instead of metal studs, other types of support members may be used;
- the partition wall or wall liner may be curved instead of being planar;
- the two layers of gypsum boards of the partition wall may each be provided with their own dedicated studs ("double stud partition").

In the partition wall and wall lining shown in Figs. 1 and 2, the support members are positioned at a distance D between adjacent support members. The distance D between adjacent support members should not exceed a certain threshold distance as to maintain an adequate strength of the partition wall or wall lining. On the other hand, the distance D is preferably as large as possible as this allows for minimizing the amount of support members needed, thus resulting in a shorter construction time and considerable savings on materials.

The present application provides partitions and wall linings which allow for positioning the support members at relatively large distances from each other. The partitions and wall linings are characterized in that gypsum boards with a specific composition are used.

In particular, provided herein is a construction which comprises a partition and/or wall lining. The partition or wall lining of said construction comprises one or more gypsum boards which are fixed to two or more parallel support members, wherein said support members have an axis to axis interdistance of at least 90 cm. A construction comprising a partition or wall lining, said partition or wall lining comprising a gypsum board fixed to two or more parallel support members, wherein said gypsum board comprising:
- a gypsum core having a bulk density of at least 1100 kg/m³ and comprising glass fibers in an amount of at least 3200 g/m³; and
- two faces, said faces being provided with a liner;wherein said support members have an axis to axis interdistance of at least 90 cm, preferably at least 100 cm, more preferably at least 110 cm and advantageously about 120 cm.

This specific combination of the high bulk density, the presence of the glass fibers in the core and the presence of the two liners on the board make the board unique with high strength.

Typically, the construction described herein, and in particular the partition or wall lining thereof, will have a planar shape and be vertically oriented. However, other shapes and orientations are not excluded. For example, in particular embodiments, the construction may be curved and/or slanted.

The partition or wall lining of the construction described herein comprises one or more gypsum boards. In particular embodiments, no other types of boards or panels are used. However, it is not excluded that in certain embodiments, a combination of one or more gypsum boards and other panels is used. For example, a partition, which typically has two opposing sides, may be provided with gypsum boards on one side, and with other types of panels on the other side. Additionally or alternatively, if multiple layers of panels are used, one layer may contain gypsum boards whereas another layer may contain other types of panels. In certain cases, different types of panels may be used within a single layer of panels. Examples of other types of panels which may be used in combination with gypsum boards include, but are not limited to (fiber)cement board and steel panels.

The partition or wall lining described herein typically contains a layer of boards or panels, said layer comprising at least one gypsum board. In preferred embodiments, the partition or wall lining may comprise at least one layer of gypsum boards. In particular embodiments, the wall lining described herein contains a single layer of gypsum boards. In the case of a partition, the partition preferably comprises at least one layer of gypsum boards on each side of the partition. In particular embodiments, the partition may comprise a single layer of gypsum boards on each side of the partition. In other embodiments, the wall lining or one or more sides of the partition may be provided with more than one layer of gypsum boards.

The gypsum board(s) of the construction described herein contain a gypsum core. The gypsum core typically comprises gypsum as its main component. In particular embodiments, the core comprises at least 60 wt% gypsum, preferably at least 70 wt% gypsum, more preferably at least 85 wt% gypsum. In particular embodiments, the core comprises from 70 wt% to 97 wt% gypsum, more particularly from 70 wt% to 95 wt% gypsum, for example from 85 wt% to 92 wt% gypsum. The gypsum concentrations referred to herein refer to the pure gypsum content, i.e. excluding impurities. The pure gypsum content of the core can be determined via Differential Scanning Calorimetry/Thermogravimetric Analysis (DSC/TGA).

The gypsum may be of synthetic or natural origin. Preferably, the gypsum is obtained from a high purity plaster (i.e. having a high plaster content, and preferably a high calcium sulphate HH content), preferably a plaster having a calcium sulphate HH content of at least 93 wt% (based on the total weight of the plaster). The present inventors have found that gypsum obtained from such plasters provide particularly good mechanical properties. In particular embodiments, the gypsum is at least partially obtained from the hydration of synthetic plaster, more particularly plaster which was obtained through the calcination of synthetic gypsum, preferably DSG. Synthetic plaster typically contains few impurities (typically less than 5%). In specific embodiments, the plaster is at least partially obtained through the calcination of DSG containing mainly needle-like gypsum crystals. In particular embodiments, the plaster for manufacturing the gypsum core may be obtained from recycled waste gypsum. Typically, such plaster also is of high purity. In certain embodiments the plaster used for manufacturing the gypsum core may be a mixture of plaster obtained from DSG, and plaster obtained from recycled waste gypsum. The gypsum core of the gypsum board(s) preferably has a density which is relatively high. A high board density can result in an increased board strength. The core of the plasterboard(s) has a bulk density of at least 1100 kg/m³. In further embodiments, the core of the plasterboard(s) has a bulk density of at least 1150 kg/m³. In yet further embodiments, the core of the plasterboard(s) has a bulk density of at least 1200 kg/m³.

Typically, the density of the core will not exceed 1300 kg/m³. In particular embodiments, the core has a density between 1000 kg/m³ and 1300 kg/m³, preferably between 1100 kg/m³ and 1250 kg/m³, most preferably between 1150 kg/m³ and 1250 kg/m³.

The production of high density boards preferably involves the use of plaster slurries containing relatively low amounts of gauging water. Such slurries typically have a poor flowability. In order to restore the flowability to acceptable levels, a fluidizing agent can be added. Fluidizing agents are also known as "fluidizers", "dispersants", and "plasticizers". The amount of fluidizing agent added may depend on the type of fluidizing agent used, and the desired flowability of the slurry.

Preferred fluidizers are polymers selected from the list consisting of a polycarboxylate ether (PCE) such as polyoxyalkylene polycarboxylates; and a polyphosphonate polyoxyalkylene. Preferably, salts of such polymers are used, such as sodium salts. In particular embodiments, the fluidizers are or comprise members of the list consisting of a polycarboxylate polyethylene glycol), and polyphosphonate poly(ethylene glycol).

In preferred embodiments, the core comprises one or more fluidizers which are polycarboxylate ethers (PCEs). This class of fluidizers are effective in a broad concentration range, thereby allowing for a sufficient fluidity of the plaster slurry during the manufacture of the plasterboard, even at very low water to plaster ratios (e.g. less than 0.65). PCEs are water-soluble comb polymers which typically have a (negatively) charged backbone and uncharged side chains. The backbones can be composed of polymers based on monomers selected from acrylic acid, methacrylic acid, maleic acid, vinyl, allyl and mixtures thereof. The side chains, often being a polyalkylene glycol, may be grafted by either esterification or amidation to the pre-formed backbone bearing carboxylic acid groups or included through copolymerization of backbone monomers with macromonomers carrying a side chain.

The gypsum core of the plasterboard(s) may comprise one type of polycarboxylate ether, or a mixture of different types of polycarboxylate ethers.

In preferred embodiments, the one or more PCEs have a molecular mass ranging from 10,000 Daltons to 400,000 Daltons. In further embodiments, the one or more PCEs have a molecular weight between 20,000 Daltons and 60,000 Daltons.

Examples of suitable PCE compounds and methods for the preparation thereof are described in patent EP2411346 (Lafarge Gypsum), patent US6777517 (Degussa), patent US5798425 (Suddeutsche Kalkstickstoff), patent application US2006/0278130 (United States Gypsum), and patent application WO2012/028668 (Sika), which are hereby incorporated by reference.

Examples of suitable commercially available PCEs include, but are not limited to: Ethacryl^{™} M and Ethacryl^{™} G (available from Coatex, Arkema Group, France); Viscocrete^{®} G2 (available from Sika AG, Switzerland); neomere^{®}FLOW 580N, neomere^{®}FLOW 570S, and CHRYSO^{®}Fluid Premia 180 (available from Chryso SAS, France); Melflux^{®} 1086L (available from BASF, Germany); and Mighty G21 (available from Kao Specialties Americas).

PCEs are polymers and therefore comprise at least one repeating unit. Often, PCEs are copolymers obtained from two or more co-monomers, and therefore contain different repeating units. The PCEs may comprise random or statistical copolymers, gradient copolymers, alternating copolymers, and/or block copolymers.

In particular embodiments, the one or more fluidizers comprise at least one PCE comprising a repeating unit of Formula (I): 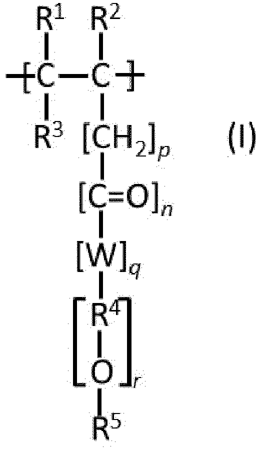 wherein
p is an integer from 0 to 2;
n and q are independently 0 or 1; preferably q is 1 if *n* is 1;
*r* is an integer from 0 to 500, preferably at least 2;
W is oxygen, nitrogen, or a bivalent NH radical; preferably W is oxygen;
R¹, R², and R³ independently are selected from the list consisting of hydrogen, an aliphatic hydrocarbon group comprising 1 to 20 carbon atoms, and -COOR⁸; wherein R⁸ is hydrogen, C₁₋₄alkyl, a monovalent metal, a divalent metal, a trivalent metal, or a (quaternary) ammonium radical; wherein preferably not more than one of R¹, R², and R³ is -COOR⁸; preferably R¹ and R³ are hydrogen;
R⁴ is C₂₋₂₀alkylene, preferably C₂₋₄alkylene; and
R⁵ is hydrogen, C₁₋₂₀alkyl, or a radical of Formula (IIa) or (IIb): 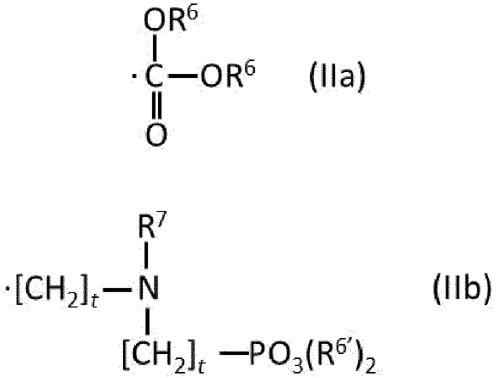 wherein
   R⁶ and R^{6'} are hydrogen, C₁₋₂₀alkyl, a monovalent metal, a divalent metal, a trivalent metal, or a (quaternary) ammonium radical;
   t is an integer from 0 to 18; and
   R⁷ is hydrogen, C₁₋₁₈alkyl, or a radical of formula -[CH₂]ₜPO₃(R^{6'})₂, wherein t and R^{6'} have the same meaning as defined above.

In particular embodiments, the one or more fluidizers may comprise at least one PCE comprising a repeating unit of Formula (I), wherein: p is an integer from 0 to 2; n and q are 1; *r* is an integer from 2 to 250; W is oxygen; R¹, R², and R³ are hydrogen; R⁴ is C_{2- 4}alkylene; and R⁵ has the same meaning as defined above.

In particular embodiments, the one or more fluidizers may comprise at least one PCE comprising a repeating unit of Formula (I), wherein: p is an integer from 0 to 2; *n* is 0; q is 1; *r* is an integer from 2 to 250; W is oxygen; R¹, R², and R³ are hydrogen; R⁴ is C_{2- 4}alkylene; and R⁵ has the same meaning as defined above. In further embodiments, p may be 0 or 1.

In particular embodiments, the one or more fluidizers may comprise a PCE comprising at least one repeating unit which satisfies Formula (III): 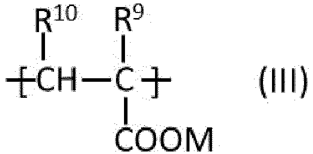 wherein
R⁹ is hydrogen or C₁₋₄alkyl;
R¹⁰ is hydrogen, C₁₋₄alkyl, or -COOM'; and
M and M' are independently selected from is hydrogen, C₁₋₆alkyl, or a monovalent metal, a divalent metal, or a trivalent metal. Preferably, M is Na or K.

In preferred embodiments, R¹⁰ is hydrogen, and M is Na or K. In further preferred embodiments, R⁹ and R¹⁰ are hydrogen; and M is Na or K.

In particular embodiments, the one or more fluidizers may comprise at least one PCE, which is a polymer comprising a repeating unit of Formula (III) shown above, wherein:
R⁹ is hydrogen;
R¹⁰ is a radical of formula -COOM', wherein M' is Na or K; and
M is a radical of formula -[CH₂CH₂₀]*ₚ*CH₃ wherein p is an integer from 1 to 100.

In preferred embodiments, the one or more fluidizers may comprise a PCE having a repeating unit which satisfies Formula (IV) 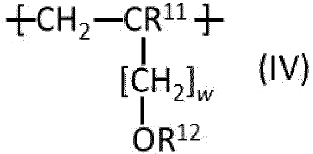
wherein R¹¹ is hydrogen, or a saturated or unsaturated aliphatic hydrocarbon group comprising 1 to 5 carbon atoms, which may be linear or branched;
w is an integer ranging from 0 to 3, and preferably 0 or 1; and
R¹² is derived from an unsaturated (poly)alkylene glycol ether group, preferably according to Formula (V): 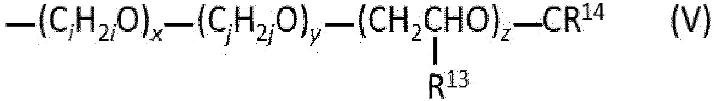
wherein i and j are independently an integer from 2 to 5; preferably at least one of *i* and *j* is 2;
x and y are independently an integer ranging from 1 to 350;
z is an integer ranging from 0 to 200;
R¹³ is a substituted or non-substituted C₆₋₁₀aryl group, preferably phenyl; and
R¹⁴ is hydrogen, an aliphatic hydrocarbon group comprising 1 to 20 carbon atoms, a radical of Formula (Ila) or (IIb) (wherein R⁶, R^{6'}, and t have the same meaning as defined above), or a group of Formula (IIIa), (IIIb), or (IIIc): 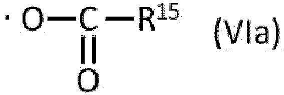 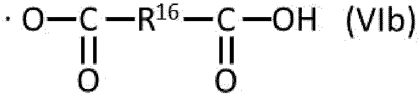 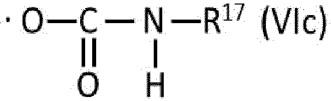 wherein R¹⁵ and R¹⁷ independently are C₁₋₂₀alkyl, C₆₋₁₂aryl, C₇₋₂₀aralkyl, or C₇₋₂₀alkylaryl; and R¹⁶ is C₁₋₂₀alkylene, C₆₋₁₂arylene, C₇₋₂₀aralkylene, or C₇₋₂₀alkylarylene.

In particular embodiments, the one or more fluidizers may comprise a PCE having two or more repeating unit selected from a repeating unit of Formula (I), a repeating unit of Formula (III), and a repeating unit of Formula (IV) as described above.

PCE compounds should comprise at least one repeating unit comprising a carboxyl group, or salt or ester thereof. Preferably, the one or more PCE compound(s) comprise at least 50 wt% of one or more repeating units comprising a carboxyl group, or salt or ester thereof. Preferably, the PCE compound comprises at least one repeating unit:
- of Formula (I) wherein n and q are 1, W is oxygen; and R¹, R², R³, R⁴, R⁵, *p, q,* and rare as defined above; and/or
- of Formula (III) wherein R⁹, R¹⁰, and M are as defined above.

Preferably, a salt form is used for the carboxyl moieties; most preferably Na and/or K salts.

In particular embodiments, the one or more fluidizers may comprise at least one PCE comprising a repeating unit originating from a monomer selected from:
- unsaturated monomers of monocarboxylic or dicarboxylic acid, such as acrylic acid, methacrylic acid, maleic acid, maleic anhydride, fumaric acid, itaconic acid, itaconic anhydride or citraconic acid, and their salts of monovalent or divalent metals, quaternary ammonium or organic amines;
- esters and diesters of the abovementioned unsaturated monomers of monocarboxylic or dicarboxylic acid having an alcohol functional group having from 1 to 30 carbon atoms;
- amides and diamides of the abovementioned unsaturated monomers of monocarboxylic or dicarboxylic acid having an amine functional group having from 1 to 30 carbon atoms;
- esters and diesters of the abovementioned unsaturated monomers of monocarboxylic or dicarboxylic acid having an alkoxy(poly(alkylene glycol)s) functional group obtained by addition of from 1 to 500 mol of alkylene oxide having from 2 to 18 carbon atoms to the abovementioned alcohols and amines;
- esters and diesters of the abovementioned unsaturated monomers of monocarboxylic or dicarboxylic acid having a glycol functional group possessing from 2 to 18 carbon atoms or possessing from 2 to 500 poly(alkylene glycol)s as molar addition number of the preceding glycols;
- unsaturated sulfonic acids, such as vinylsulphonate, (meth)allylsulphonate, 2-(meth)acryloxyethylsulphonate, 3-(meth)acryloxypropylsulphonate, 3-(meth)acryloxy-2-hydroxypropylsulphonate, 3-(meth)acryloxy-2-hydroxypropyl sulfophenyl ether, 3-(meth)acryloxy-2-hydroxypropyloxysulfobenzoate, 4-(meth)acryloxybutylsulphonate, (meth)acrylamidomethylsulfonic acid, (meth)acrylamidoethylsulfonic acid, 2-methylpropanesulfonic acid (meth)acrylamide and styrenesulfonic acid, or their salts of monovalent or divalent metals, quaternary ammonium or organic amines;
- vinylaromatic compounds, such as styrene, α-methylstyrene, vinyltoluene and p-methylstyrene;
- unsaturated amides, such as (meth)acrylamide, (meth)acrylalkylamide, N-methylol(meth)acrylamide and N,N-dimethyl(meth)acrylamide;
- unsaturated esters, such as vinyl acetate and vinyl propionate;
- unsaturated amines, such as aminoethyl(meth)acrylate, methylaminoethyl (meth)acrylate, dimethylaminoethyl(meth)acrylate, dimethylaminopropyl(meth)-acrylate, dibutylaminoethyl(meth)acrylate and vinylpyridine;
- allyl compounds, such as (meth)allyl alcohol and glycidyl(meth)allyl ether; for which the molar mass of said copolymer is from 15 000 to 250 000 daltons, said copolymer not comprising crosslinking units.

In particular embodiments, the core comprises a fluidizing agent which is a polyoxyalkylene polycarboxylate salt, more particularly a polyoxyethylene polycarboxylate salt or polycarboxylate polyethylene glycol), most particularly a polyoxyethylene polycarboxylate sodium salt.

The polycarboxylate ether and/or polyphosphonate polyoxyalkylene fluidizers in the core of the plasterboards described herein are preferably present in the core in a total amount of at least 2400 g/m³; more preferably at least 4800 g/m³. Many fluidizers are not very efficient when used in high doses. Advantageously, PCE type fluidizers are efficient up to relatively high doses, and their ideal dose may be determined based on cost as well as efficiency. Typically, the core will comprise at most 20000 g/m³ of fluidizers. In preferred embodiments, the core comprises at most 15000 g/m³ of fluidizers, for example about 8000 g/m³ of fluidizers.

The preferred amount of fluidizer used may depend on the desired board core density. In particular embodiments, the core has a density above 1100 kg/m³ and comprises preferably polycarboxylate ether and/or polyphosphonate polyoxyalkylene fluidizer(s) in a total amount of at least 4800 g/m³. In particular embodiments, the core has a density above 1100 kg/m³ and comprises polycarboxylate ether fluidizer(s) in a total amount of at least 4800 g/m³. In particular embodiments, the core has a density above 1200 kg/m³ and comprises polycarboxylate ether and/or polyphosphonate polyoxyalkylene fluidizer(s) ina total amount of at least 6000 g/m³. In particular embodiments, the core has a density above 1200 kg/m³ and comprises polycarboxylate ether fluidizer(s) in a total amount of at least 6000 g/m³.

The core of the plasterboard described herein comprises glass fibers. The glass fibers contribute to the mechanical strength of the gypsum boards. Within the context of the present invention, fibers are understood to mean elongated bodies with length dimension much greater than width and thickness. Preferably, the length is at least 50 at least 100 times, or even at least 500 times greater than the width and thickness. The fibers may have a curved or straight shape. Furthermore, the term "fibers" includes monofilaments, split fibers, and stable fibers. The fibers can have a regular or irregular cross section. The shape of the cross section of the fibers may be circular or of another shape.

The glass fibers typically have an average (number average) length ranging from 3 mm to 24 mm, preferably ranging from 10 mm to 15 mm; for example about 13 mm. The fibers preferably have a diameter ranging from 5 µm to 25 µm, more preferably ranging from 8 µm and 20 µm, most preferably ranging from 10 µm to 15 µm; for example about 13 µm.

In particular embodiments, the glass fibers are made of alumino-borosilicate glass with less than 1 wt% alkali oxides; such glass compositions are known as "E-glass". However, it is envisaged that also other glass compositions may be used. In particular embodiments, the core may comprise a combination of glass fibers and other fibers. However, it is envisaged that in other embodiments, the core may comprise only glass fibers.

The glass fibers are present in the core in a total amount of at least 3200 g/m³. In particular embodiments, the core comprises at least 4000 g/m³ of glass fibers. In further embodiments, the core comprises glass fibers in a range of 3200 g/m³ to 12000 g/m³; preferably in the range of 3500 g/m³ to 10400 g/m³. In yet further embodiments, the core comprises glass fibers in a range of 3500 g/m³ to 10000 g/m³."

In particular embodiments, the core may further comprise fibers other than glass fibers. The presence or absence of other fibers will typically depend on the desired properties and application of the plasterboard. In particular embodiments, the core does not comprise fibers other than glass fibers.

The gypsum board(s) of the construction described herein typically have two opposing faces. In preferred embodiments, at least one face of the gypsum board(s) is provided with a liner, also referred to herein as "facer". The core of gypsum boards typically is pressed between a pair of facers or liners. Accordingly, typically both faces are provided with a facer or liner.

Both faces may be provided with the same type of liner, or a different type. In particular embodiments, the liner may be a paper (cellulose fiber) liner or glass fiber mat liner. In particular embodiments, the liner comprises at least one ply of a non-woven or woven fabric and a binder composition. In particular embodiments, at least one face of the gypsum board(s) is provided with a liner having a weight ranging from 90 to 250 g/m². In further embodiments, both faces of the gypsum board(s) are provided with such liner. Preferably, the liner is a paper liner, more preferably a paper liner having a weight ranging from 150 to 250 g/m².

The invention allows obtaining new boards with improved high strength with a standard paper liner. There is thus no need to revert to specific liners nor to change the standard process for producing the boards.

The gypsum board typically has a rectangular shape, although other shapes may also be envisaged. The gypsum board typically has a width ranging from 60 cm to 120 cm; and a length ranging from 200 cm to 350 cm.

The gypsum board(s) typically have a thickness ranging from 9 mm to 25 mm. A lower thickness results in a lower weight of the boards, whereas a higher thickness results in stronger boards. In preferred embodiments, the gypsum board(s) have a thickness generally ranging from 6 mm to 40 mm, typically ranging from 10 mm to 16 mm, especially from 10 mm to 15 mm, more preferably ranging from 12 mm to 15 mm, for example about 12.5 mm. The present invention allows for using boards having a standard thickness e.g. 12.5 mm yet an elevated interstud distance such as twice the standard interstud distance.

The gypsum board(s) may further comprise one or more additives such as water repellents, pigments, fillers, accelerants, retardants, starches, and anti-sagging agents.

In particular embodiments, the core of the plasterboard(s) may comprise one or more water repellant agents, which are dispersed in the core matrix. The term "water repellant agent" refers to a component or compound which is present in the plaster slurry for the preparation of the core, and which thereby increase the hydrophobicity of the core and/or can improve the hydrofugation properties of the core.

The water repellant agent typically is a hydrophobic material. In present context, and as commonly understood, the term "hydrophobic" connotes a property of a material, reflecting its water repellency. For present purposes, a hydrophobic material is defined as a material which, when provided as a flat surface, exhibits a water contact angle of at least 90°, and upwards to 180°.

The gypsum board described herein can have excellent water repellency properties, even with relatively low amounts of water repellant agents. In particular embodiments, water repellant agent(s) may be present in a total amount of 500 g/m³ to 6000 g/m³; preferably in a total amount of 1000 g/m³ to 4800 g/m³. In particular embodiments, the water repellant agent(s) may be present in a total amount of 1500 g/m³ to 2500 g/m³.

Suitable water repellant agents include, but are not limited to: silicones; waxes; thermoplastic synthetic resins such as poly(vinyl acetate); poly(vinyl chloride); and a copolymer of vinyl acetate and vinyl chloride and acrylic resins. In preferred embodiments, the water repellant agent(s) are (hydrophobic) silicones.

In preferred embodiments, the one or more water repellant agents may comprise or be a polysiloxane, more particularly an organopolysiloxane, for example a polyalkylhydrosiloxane. Particularly preferred polyalkylhydrosiloxanes are polymethylhydrosiloxanes (PMHS).

In particular embodiments, the water repellant agent(s) comprise a polysiloxane which is a linear, cyclized or branched macromolecular water-repellant compound containing polysiloxane units, each of which is chosen from the group consisting of the groups (R¹R²R³SiO_{1/2}), (R¹R²SiO) and (R²SiO_{3/2}), wherein R¹ is selected from the list consisting of hydrogen, halo, or alkoxy; and R² and R³ are independently selected from alkyl or phenyl. In particular embodiments, R¹ is selected from the list consisting of hydrogen, halo, or C₁₋₆alkoxy; and R² and R³ are independently selected from C₁₋₆alkyl or phenyl

In preferred embodiments, the one or more water repellant agents may comprise a polysiloxane; wherein the core of the plasterboard further comprises one or more clay minerals, more particularly one or more aluminium phyllosilicates selected from the group consisting of kaolinite, illite, halloysite, montomorillonite, vermiculite, talc, sepiolite, palygorkite, and pyrophyllite. A synergy between clay minerals and polysiloxanes can result in significantly improved water repellant properties. In the context of the present invention, the clay minerals as such are not considered a water repellent agent. Preferred clay minerals are kaolinite and/or illite. Most preferably, the clay mineral is or comprises kaolinite.

In particularly preferred embodiments, the plasterboard may comprise a mixture of one or more polysiloxane water repellant agents, and one or more clay minerals.

In particular embodiments, the core comprises one or more silicones an amount ranging from 1000 to 5600 g/ m³; more preferably from 1000 to 2400 g/ m³"; and one or more clay minerals. If used, the total weight of the one or more silicones is typically between 1 wt% and 50 wt%, based on the total weight of the one or more clay minerals. In further embodiments, the total weight of the one or more silicones is between 5 wt% and 20 wt%, based on the total weight of the one or more clay minerals.

In particular embodiments, the gypsum board(s) may comprise one or more retarders, more particularly set retarders. Suitable set retarders include, but are not limited to: lysed or degraded proteins such as hydrolytically degraded keratin; hydroxycarboxylic acids or salts thereof, such as citric acid and malic acid; phosphonic acids or salts thereof; and phosphates and salts thereof, such as calcium monophosphate or sodium tripolyphosphate.

In particular embodiments, the core of the gypsum board(s) may comprise starch. The starch may be natural starch; or a starch derivative such as a substituted starch. The starch may be derived from e.g. potato, tapioca, or corn. Starches are often used to improve the adhesion of a facer to a core. It is further thought that substituted starches act as efficient binders for the inorganic phase of plasterboards, e.g. gypsum, thus increasing the core strength of the plasterboard. Preferred substituted starches include, but are not limited to, hydroxyethylated starch, hydroxypropylated starch, and/or acetylated starch. Preferably, the starch is insoluble in cold water, but dissolves at a higher processing temperature during forming, setting, or drying of the plasterboard. This is thought to limit excessive migration of the starch, so that it remains in the plasterboard core, to provide a binder for the gypsum crystals.

Other compound which may improve bonding between the core and the liners include poly(vinyl alcohol) (PVA) polymers; and PVA-poly(vinyl acetate) copolymers comprising at least 50 wt% vinyl alcohol monomers. However, as PVA can cause some foaming, it is preferably not used for the preparation of cores having a very high density, more particularly above 1100 kg/m³, in particular above 1200 kg/m³.

The partition or wall lining of the construction described herein contain at least two parallel support members, onto which the gypsum board(s) are fixed. Support members suitable for partitions or wall liners are well known in the art.

The support members typically are straight longitudinal objects, i.e. with a length/width ratio of at least 10, preferably at least 20.

The support members have an axis to axis interdistance of at least 90 cm. In preferred embodiments, the axis to axis interdistance is at least 100 cm, more preferably at least 110 cm, for example about 120 cm. In particular embodiments, the axis to axis interdistance ranges from 90 cm to 150 cm, more particularly from 90 cm to 130 cm. With axis to axis interdistance, also referred to herein as "interstud distance" is meant the distance between the two axes of the two support members. The skilled person will understand that this refers to two adjacent support members, i.e. no other support members are provided between said two adjacent support members.

The term "parallel" as used herein means substantially parallel, and includes orientations wherein the angle between the axes of the support members is less than 5°, preferably less than 3°, more preferably less than 1°, most preferably 0°. In case the angle between the axes is not 0°, the axis to axis interdistance is the distance between the middle of the axis of the first support member and the middle of the axis of the second support member.

The support members are preferably positioned at regular intervals, i.e. the distances between adjacent support members are the same for each pair of adjacent support members which are supporting the one or more gypsum boards. Nevertheless, it is not excluded that the support members are not positioned at regular intervals. However, it is preferred that for all the parallel support members which support the one or more gypsum boards, the axis to axis interdistance between adjacent support members is above 90 cm, preferably above 100 cm, or even above 110 cm.

In the constructions provided herein, the support members are typically oriented substantially vertically, although other orientations are not excluded.

The constructions described herein will typically comprise more than two support members, depending on the size (typically width) of the construction and the axis to axis interdistance of the support members.

The two or more support members may be identical or different. Preferably the support members are identical.

Various types of support members may be used, as is well known in the art. For example, the support members may comprise studs, beams and/or laths, which may be made of metal and/or wood. Preferably, metal studs are used, e.g. steel studs. The studs typically have a C-shaped cross section.

The one or more gypsum board(s) are fixed to the support members. The boards may be installed horizontally (long side lying) or vertically (long side standing). If the boards are installed vertically, the axis to axis interdistance of the (vertical) studs is typically equal to the board width. If the boards are installed horizontally, the board length is typically a multiple of the axis to axis interdistance of the (vertical) studs.

Fixation of the boards to the support members can be obtained in various ways, e.g. via screws, nails, glue, or the like. Preferably, the fixation is obtained via fixation elements such as screws and/or nails. Most preferably, the fixation elements are screws.

The time needed for the installation of the construction described herein not only depends on the distance between the support members, but can also depend on the distance between adjacent fixation elements. Indeed, the larger the distance between adjacent fixation elements is, the fewer fixation elements are needed, and the shorter the installation time. In particular embodiments, the distance between adjacent fixation elements on said parallel support members is at least 250 mm; preferably between 250 mm and 600 mm.

Typically, the gypsum board(s) are directly fixed to the support members. More particularly, the gypsum board(s) may be fixed such that there is direct contact between the gypsum board(s) and the support members. However, it is not excluded that in specific embodiments, the gypsum boards(s) are indirectly fixed to the support members, e.g. via an intermediate part. In such case, there is no direct contact between the board(s) and the support members.

Further provided herein is a method for the manufacture of the gypsum board described herein, which is not claimed.

Methods for the manufacture of a plasterboard based on a given plaster composition or slurry are well known in the art. More particularly, the method described herein may comprise:
(i) providing an aqueous gypsum slurry or paste;
(ii) forming said slurry or paste into a panel; and
(iii) allowing said panel to set.

In step (i), an aqueous plaster slurry or paste is provided. The slurry may be prepared by mixing plaster with water and additives (such as fluidizing agents and fibers) in a mixer as is known in the art. The moment of introduction of the additives is not critical. For example, one or more additives may be introduced directly in the gauge water, or be introduced directly in the mixer.

In preferred embodiments, the slurry or paste comprises plaster (hydratable calcium sulphate), water, a fluidizing agent, and glass fibers; in amounts as to allow obtaining a gypsum board as described above. The skilled person can select appropriate relative amounts of plaster and additives as to obtain such plasterboard, without undue burden. As described above, the fluidizing agent is preferably selected from the list consisting of a polycarboxylate ether, and a polyphosphonate polyoxyalkylene; and preferably salts thereof.

In preferred embodiments, the plaster slurry or paste has a low water to plaster ratio; i.e. the weight of the gauging water in the paste or slurry over the dry weight of the plaster in this slurry or paste. It was found that, for a given density of the final plasterboard, the reduction of the water to plaster ratio tends to increase the compressive strength of the board. More particularly, the plaster slurry or paste may have a water to plaster ratio less than or equal to 0.70; i.e. at most 0.70 parts of water for 100 parts of plaster (parts by weight). According to some embodiments, the water to plaster ratio may be less than or equal to 0.65, or even less than or equal to 0.60, or even less than or equal to 0.55. In particular embodiments, the water to plaster ratio ranges from 0.45 to 0.70, preferably from 0.45 to 0.63. In specific embodiments, the water to plaster ratio may range from 0.48 to 0.70; or from 0.48 to 0.63.

Together, the plaster and gauging water typically form at least 82 wt% of the slurry, preferably at least 85 wt%, more preferably at least 90 wt%.

Preferably, the plaster has a calcium sulphate HH content of at least 93 wt% (based on the total weight of the plaster), preferably more than 94 wt%. The plaster used in the slurry may be obtained from synthetic or natural gypsum; and is preferably obtained from synthetic gypsum, such as DSG.

As stated above the process for preparing the boards is carried out in a standard gypsum board plant without any substantial modification.

The plasterboards described herein preferably are high density boards. Accordingly, the slurry used in step (i) will typically not comprise (dedicated) foaming agents. Preferably, the slurry is essentially free of foaming agents, especially free of alkylsulphates, alkylethersulphates, alkylethercarboxylates, ethoxylated alkylphenols, alkylsulphonates, alkylpolyglucosides, betaines, amine oxides, alkylpolysaccharides, and alkylsulfosuccinates.

In particular embodiments, the plaster slurry comprises:
- water and plaster (hydratable calcium sulphate), wherein the water to plaster ratio ranges from 0.45 to 0.70;
- one or more fluidizing agents, preferably polycarboxylate ether fluidizing agents, in a total amount ranging from 0.18 wt% to 2.0 wt% based on the dry weight of said plaster; and
- glass fibers, preferably in a total amount ranging from 0.25 wt% to 5 wt%, based on the dry weight of said plaster.

In particular embodiments, the plaster slurry comprises:
- water and plaster (hydratable calcium sulphate), wherein the water to plaster ratio ranges from 0.45 to 0.70;
- one or more fluidizing agents, preferably polycarboxylate ether fluidizing agents, in a total amount ranging from 0.2 wt% to 1.5 wt% based on the dry weight of said plaster; and
- glass fibers, preferably in a total amount ranging from 0.3 wt% to 1.5 wt%, based on the dry weight of said plaster.

In particular embodiments, the plaster slurry comprises:
- water and plaster (hydratable calcium sulphate), wherein the water to plaster ratio ranges from 0.45 to 0.70;
- one or more fluidizing agents, preferably polycarboxylate ether fluidizing agents, in a total amount ranging from 0.3 wt% to 1.5 wt% based on the dry weight of said plaster; and
- glass fibers, preferably in a total amount ranging from 0.3 wt% to 1.5 wt%, based on the dry weight of said plaster.

In particular embodiments, the plaster slurry comprises:
- water and plaster (hydratable calcium sulphate), wherein the water to plaster ratio ranges from 0.45 to 0.63;
- one or more fluidizing agents, preferably polycarboxylate ether fluidizing agents, in a total amount ranging from 0.3 wt% to 1.5 wt% based on the dry weight of said plaster; and
- glass fibers, preferably in a total amount ranging from 0.3 wt% to 1.5 wt%, based on the dry weight of said plaster.

The plaster typically is provided as a powder. The particle size of the plaster in the slurry usually is smaller than the original particle size of the dry plaster before mixing into the slurry. The particle size can be expressed by d50. The term "d50" in the sense of the present invention is a measure for the average particle size and is defined as follows: 50% (by number) of the particles (e.g. grains) in the corresponding sample have a size which is equal or smaller than the given d50 value. The term "particle size" especially represents the diameter of a sphere whose volume is identical to that of the particle under consideration having an arbitrary shape. The particle sizes referred to herein can be measured using Laser Diffraction Spectrometry (LDS), more particularly according to ISO13320-1:1999. For the measurements, the plaster is preferably dispersed in alcohol such as isopropanol, as to avoid hydration of the plaster. Prior to the measurement, the plaster in alcohol may be subject to ultrasound for a duration of 2 minutes in order to obtain an optimal dispersion of the particles.

In particular embodiments, the dry plaster (i.e. before mixing with water) has a d50 ranging from 0.5 µm to 150 µm, preferably ranging from 1.0 µm to 50 µm, and more preferably ranging from 2 µm to 25 µm, for example about 7 µm. In particular embodiments, the dry plaster has a d50 ranging from 10 to 100 µm before mixing, preferably ranging from 15 to 75 µm.

In step (ii) the plaster composition is formed into a panel. This can be done using known methods. Typically, the plaster composition is deposited between two facers or liners, i.e. sheets of covering material. Then, the slurry is formed or pressed into a panel. Typically the gypsum slurry is cast on top of one such liner, and the second liner may be provided after this casting. The gypsum slurry may be squeezed between said liners. The liners or facers may comprise or are made of paper or cardboard; and/or may comprise a non-woven fabric comprising mineral, glass, and/or polymer fibers. The panel produced in step (ii) is of indefinite length, and will be cut to the required size.

In step (iii), the panel obtained in step (b) is allowed to set. More particularly, the plaster composition in the panel is allowed to set. This is well known in the art. Typically, the method described herein will also comprise the step of drying the panel. Drying is typically performed in a drier at elevated temperature, preferably the drier temperature is set between 100°C and 250°C. The actual temperature of the plasterboard during drying preferably does not exceed 100°C. Drying typically occurs after the setting of the panel. More particularly, the rehydration rate is preferably as close as possible to 100%, preferably at least 97%.

### EXAMPLES

The following examples are provided for the purpose of illustrating the present invention and by no means are meant and in no way should be interpreted to limit the scope of the present invention.

### 1. Plasterboard preparation

### 1.1 Plaster slurry preparation

Plasterboards were prepared from four different plaster slurries. The plaster slurries were prepared by dispersing plaster obtained from DSG in water at a water/plaster ratio as in Table 1. The slurries also comprise other components as set out in Table 1. All amounts in Table 1 are expressed in wt% versus the total weight of plaster. In contrast with the remainder of the present description, the DSG plaster weight in Table 1 is the weight including impurities (less than 5wt% of the DSG plaster).

In all slurries, the same type of silicone, clay, fluidizer, glass fibers, tartaric acid, and fungicide were used. The fluidizer is a polyether polycarboxylate (PCP) sodium salt (Ethacryl^{™} M, available from Coatex). The glass fibers are of E-glass and have a diameter of about 13 µm and a length of about 13 mm. The clay is kaolinite. The fungicide is sodium omadine.

**Table 1 - Composition of plaster slurries used for the manufacture of plasterboard (wt% versus total weight of plaster)**

| | **Slurry 1** | **Slurry 2** | **Slurry 3** | **Slurry 4** |
|---|---|---|---|---|
| Gypsum | 100 | 100 | 100 | 100 |
| Total gauging water | 52.9 | 53.5 | 52.4 | 53.0 |
| Fluidizer | 0.83 | 0.84 | 0.82 | 0.83 |
| Glass fibers | 0.42 | 0.84 | 0.41 | 0.83 |
| Accelerator | 0.32 | 0.32 | 0.31 | 0.31 |
| Tartaric acid | 0.00 | 0.00 | 0.02 | 0.02 |
| Retarder | 0.006 | 0.006 | 0.006 | 0.006 |
| Clay | 2.50 | 2.51 | 2.47 | 2.48 |
| Starch | 0.25 | 0.25 | 0.25 | 0.25 |
| Silicone | 0.17 | 0.17 | 0.33 | 0.33 |
| Fungicide | 0.00 | 0.00 | 0.07 | 0.07 |

### 1.2 Plasterboard preparation

Each of the slurries 1-4 described above was used for the manufacture of plasterboard. The boards were manufacture on a standard gypsum board production line, wherein the slurry was cast between two layers of a liner. After casting the slurry, the plaster was allowed to set and the obtained panels were dried.

### 2. Plasterboard characterization

Various properties of the boards were tested and were compared to the properties of two commercially available boards having the same thickness: GTEC^{®} Ladura (Siniat) and Fermacell^{®} Gypsum Fiberboard. The GTEC^{®} Ladura is classified as a gypsum hard board (GHB) and is stronger, harder, and heavier than standard plasterboard. The core comprises plaster, and hard wood fibers and glass fibers entrapped in the core. The Fermacell^{®} board is a high density board having a core comprising gypsum and paper fibers.

### 2.1 Weight and thickness

The board density, weight, and thickness of all boards were measured. The results are set out in Table 2.

**Table 2 - Characteristics of plasterboards**

| | **Board 1** | **Board 2** | **Board 3** | **Board 4** | **Ladura** | **Fermacell^{®}** |
|---|---|---|---|---|---|---|
| **Slurry** | Slurry 1 | Slurry 2 | Slurry 3 | Slurry 4 | n/a | n/a |
| **Board density (kg/m³)** | 1230 | 1230 | 1218 | 1215 | 1056 | 1150 |
| **Board weight (kg/m²)** | 15.4 | 15.7 | 15.25 | 15.38 | 13.08 | 14.37 |
| **Board thickness (mm)** | 12.54 | 12.75 | 12.52 | 12.66 | 12.22 | 12.5 |

### 2.2 Flexural strength

The flexural strength of all boards was tested. The test results are summarized in Table 4. The dry bending or flexural strength was tested in the longitudinal direction (machine direction, MD) as well as the transversal direction (cross direction, CD) according to EN 15 283-1. The results show a clearly improved Young's modulus (E modulus) and breaking load (both in machine direction and in cross direction) for boards 1-4, compared to the LaDura and Fermacell^{®} boards. Without wishing to be bound by theory, the high E modulus is believed to be influenced mainly by the density of the boards, whereas the increased breaking load is mainly achieved by the high glass fiber content.

A similar increase was also observed in humid conditions (not shown in Table 4).

**Table 4 - Flexural strength**

| | **Board 1** | **Board 2** | **Board 3** | **Board 4** | **LaDura** | **Fermacell^{®}** |
|---|---|---|---|---|---|---|
| ***Dry flexural Strength* - *MD*** | | | | | | |
| E modulus (N /mm2) | 7354 | 7443 | 7230 | 7010 | 5190 | 4080 |
| Breaking load (daN) | 89.2 | 111.9 | 85.8 | 100 | 75 | 54 |

| ***Dry flexural Strength* - *CD*** | | | | | | |
|---|---|---|---|---|---|---|
| E modulus (N/mm²) | 6310 | 6515 | 6310 | 6010 | 4170 | 3800 |
| Breaking load (daN) | 47.9 | 66.8 | 46 | 64 | 34 | 38.5 |

### 2.3 Compressive strength

The compressive strength (compression strength) of the boards was measured from a 5×5 cm² sample withdrawn from the board, according to standard ASTM C473-12. The results are summarized in Table 5, and show a significant increase of the dry compressive strength compared to the LaDura and Fermacell^{®} panels. Although not shown in Table 5, also a similar increase of the compressive strength in humid conditions was observed.

**Table 5 - Compressive strength**

| | **Board 1** | **Board 2** | **Board 3** | **Board 4** | **LaDura** | **Fermacell^{®}** |
|---|---|---|---|---|---|---|
| Dry compressive strength (N/mm²) | 29.5 | 29.8 | 28.7 | 28.7 | 10.8 | 9.9 |

The above results show that the Boards 1-4 have a very high strength. The present inventors surprisingly found that these boards could be used in partition walls with metal studs having an axis-to-axis interdistance of 120 cm, and that the resulting partition wall had a similar or even better flexural and impact resistance compared to partition walls containing conventional gypsum boards in combination with studs having an axis-to-axis interdistance of 60 cm.

Boards according to the invention and standard boards were installed in partitions with an axis to axis interdistance of the studs of 120 cm and 60 cm, respectively. All boards had a thickness of 12.5 mm. The same type of studs was used in each experiment. The stiffness of the partition was assessed using a 3 point bending test. The results are summarized in Table 1, and show that the boards according to the invention can allow for doubling the interstud distance, while still obtaining a better stiffness for the partition.

**Table 6 - Partition stiffness test**

| **Board type** | **Interstud distance (mm)** | **Partition stiffness (N.m²/m)** |
|---|---|---|
| 12.5 mm standard board | 600 | 14215 |
| Board 1 | 1200 | 16407 |

## Claims

1. A construction comprising a partition or wall lining, said partition or wall lining comprising a gypsum board fixed to two or more parallel support members, wherein said gypsum board comprising:
- a gypsum core having a bulk density of at least 1100 kg/m³ and comprising glass fibers in an amount of at least 3200 g/m³; and
- two faces, said faces being provided with a liner;
wherein said support members have an axis to axis interdistance of at least 90 cm, preferably at least 100 cm, more preferably at least 110 cm and advantageously about 120 cm.

2. The construction according to claim 1, wherein said core has a bulk density of at least 1150 kg/m³, preferably at least 1200 kg/m³, most preferably between 1150 kg/m³ and 1250 kg/m³.

3. The construction according to claim 1 or 2, wherein said core comprises glass fibers in an amount of at least 3500 and/or up to 12000 g/m³.

4. The construction according to any one of claims 1 to 3, wherein said liner is a paper liner, preferably with a weight ranging from 150 to 250 g/m².

5. The construction according to any one of claims 1 to 4, wherein said gypsum board has a thickness generally ranging from 6 mm to 40 mm, ranging from 9 mm to 15 mm, preferably 10 mm to 15 mm, more preferably about 12.5 mm.

6. The construction according to any one of claims 1 to 5, wherein said core further comprises one or more fluidizing agents selected from the list consisting of a polycarboxylate ether, a polyphosphonate polyoxyalkylene, and mixtures thereof.

7. The construction according to any one of claims 1 to 6, wherein said gypsum board is fixed to said support members via fixation elements, wherein the distance between adjacent fixation elements on a member ranges from 250 mm to 600 mm.

## Patentansprüche

1. Eine Konstruktion, die eine Trennwand oder Wandverkleidung umfasst, wobei die Trennwand oder Wandverkleidung eine Gipsplatte umfasst, die an zwei oder mehr parallelen Stützelementen befestigt ist, wobei die Gipsplatte Folgendes umfasst:
- einem Gipskern mit einer Rohdichte von mindestens 1100 kg/m³ und einem Glasfasergehalt von mindestens 3200 g/m³; Und
- zwei Flächen, wobei die Flächen mit einer Auskleidung versehen sind;
wobei die Stützelemente einen Achsenabstand von mindestens 90 cm, vorzugsweise mindestens 100 cm, besonders bevorzugt mindestens 110 cm und vorteilhafterweise etwa 120 cm haben.

2. Konstruktion nach Anspruch 1, wobei der Kern eine Rohdichte von mindestens 1150 kg/m³, vorzugsweise mindestens 1200 kg/m³, am meisten bevorzugt zwischen 1150 kg/m³ und 1250 kg/m³ aufweist.

3. Konstruktion nach Anspruch 1 oder 2, wobei der Kern Glasfasern in einer Menge von mindestens 3500 und/oder bis zu 12000 g/m³ enthält.

4. Konstruktion nach einem der Ansprüche 1 bis 3, wobei der Träger ein Papierträger ist, vorzugsweise mit einem Gewicht im Bereich von 150 bis 250 g/m².

5. Konstruktion nach einem der Ansprüche 1 bis 4, wobei die Gipsplatte im Allgemeinen eine Dicke im Bereich von 6 mm bis 40 mm, im Bereich von 9 mm bis 15 mm, vorzugsweise 10 mm bis 15 mm, besonders bevorzugt etwa 12,5 mm aufweist.

6. Konstruktion nach einem der Ansprüche 1 bis 5, wobei der Kern außerdem ein oder mehrere Fluidisierungsmittel umfasste, ausgewählt aus der Liste bestehend aus einem Polycarboxylatether, einem Polyphosphonatpolyoxyalkylen und Mischungen davon.

7. Konstruktion nach einem der Ansprüche 1 bis 6, wobei die Gipsplatte über Befestigungselemente an den Trägerelementen befestigt ist, wobei der Abstand zwischen benachbarten Befestigungselementen an einem Element im Bereich von 250 mm bis 600 mm liegt.

## Revendications

1. Construction comprenant une cloison ou une paroi, ladite cloison ou la paroi comprenant une plaque de plâtre fixée à deux ou plusieurs éléments de support parallèles, dans laquelle ladite plaque de plâtre comprend :
- un coeur de gypse ayant une densité apparente d'au moins 1100 kg/m³ et comprenant des fibres de verre en quantité d'au moins 3200 g/m³ ; et
- deux faces, lesdites faces étant pourvues d'un parement ;
dans lequel les éléments de support ont une interdistance d'axe en axe d'au moins 90 cm, de préférence d'au moins 100 cm, plus préférentiellement d'au moins 110 cm et avantageusement d'environ 120 cm.

2. Construction selon la revendication 1, dans laquelle ledit coeur a une densité apparente d'au moins 1150 kg/m³, de préférence d'au moins 1200 kg/m³, de préférence entre 1150 kg/m³ et 1250 kg/m³.

3. Construction selon la revendication 1 ou 2, dans laquelle le coeur comprend des fibres de verre dans une quantité d'au moins 3500 et/ou jusqu'à 12000 g/m³.

4. Construction selon l'une des revendications 1 à 3, dans laquelle le parement est un parement en papier, de préférence d'un grammage compris entre 150 et 250 g/m².

5. La construction selon l'une des revendications 1 à 4, dans laquelle ladite plaque de plâtre a une épaisseur généralement comprise entre 6 mm et 40 mm, entre 9 mm et 15 mm, de préférence entre 10 mm et 15 mm, plus préférentiellement d'environ 12,5 mm.

6. Construction selon l'une des revendications 1 à 5, dans laquelle le coeur comprend en outre un ou plusieurs agents fluidifiants choisis dans la liste constituée d'un éther de polycarboxylate, d'un polyphosphonate polyoxyalkylène et de leurs mélanges.

7. La construction selon l'une des revendications 1 à 6, dans laquelle la plaque de plâtre est fixée aux éléments de support par l'intermédiaire d'éléments de fixation, la distance entre les éléments de fixation adjacents sur un élément étant comprise entre 250 mm et 600 mm.
